Europäisches Patentamt

(19) European Patent Office

Office européen des brevets

(11) Numéro de publication : **0 089 253**
**B1**

(12) **FASCICULE DE BREVET EUROPÉEN**

(45) Date de publication du fascicule du brevet :
**20.08.86**

(21) Numéro de dépôt : **83400346.9**

(22) Date de dépôt : **18.02.83**

(51) Int. Cl.⁴ : **F 16 L 15/00, E 21 B 17/042**

54 **Joint pour tubes d'acier étanche aux pressions élevées et peu sensible au phénomène de grippage.**

(30) Priorité : **18.02.82 FR 8202697**

(43) Date de publication de la demande :
**21.09.83 Bulletin 83/38**

(45) Mention de la délivrance du brevet :
**20.08.86 Bulletin 86/34**

(84) Etats contractants désignés :
**AT BE CH DE IT LI LU NL SE**

(56) Documents cités :
**FR-A-    972 216**
**FR-A- 2 281 488**
**FR-A- 2 364 322**
**FR-E-     58 553**
**US-A- 2 154 037**
**US-A- 2 258 066**

(73) Titulaire : **VALLOUREC Société Anonyme dite.**
**7, place du Chancelier Adenauer**
**F-75116 Paris (FR)**

(72) Inventeur : **Plaquin, Bernard**
**15, Rond Point des Acacias**
**F-59620 Aulnoye Aymeries (FR)**

(74) Mandataire : **Nony, Michel et al**
**29, rue Cambacérès**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention est relative à un nouveau joint pour tubes d'acier et en particulier pour tubes destinés à l'industrie pétrolière. L'invention se rapporte plus particulièrement à des joints dans lesquels l'étanchéité est assurée par des couples de surfaces d'étanchéité de forme légèrement conique qui viennent prendre contact l'une contre l'autre lors du serrage du joint.

Dans ce type de joint connu on utilise sur l'élément mâle une surface d'étanchéité dont le diamètre est légèrement supérieur au diamètre correspondant de la surface d'étanchéité de l'élément femelle, de telle sorte que lors du vissage on exerce des pressions de contact importantes entre les deux surfaces d'étanchéité, pressions qui doivent être suffisantes pour assurer l'étanchéité sous la pression la plus grande que doit supporter l'assemblage de tubes.

Les joints connus de ce type peuvent comporter un seul couple de surfaces d'étanchéité situé soit à l'extrémité de l'élément mâle soit à l'extrémité de l'élément femelle. Ils peuvent également comporter deux couples de surfaces d'étanchéité disposés de part et d'autre des filetages d'une part à l'extrémité de l'élément mâle et d'autre part à celle de l'élément femelle (FR-A-972 216).

Par ailleurs les conditions d'exploitation des gisements actuels sont telles que l'on est amené à collecter le pétrole à des profondeurs de plus en plus grandes ce qui oblige à réaliser des joints restant étanches à des pressions de service qui peuvent dépasser 1 000 kilos/cm².

De plus il arrive également que l'on soit amené à exploiter des gisements à grande profondeur qui contiennent des teneurs élevées en agents corrosifs tels que l'hydrogène sulfureux ou le gaz carbonique, et que l'on soit obligé d'utiliser des aciers inoxydables contenant du chrome, du nickel, ainsi que d'autres éléments d'addition. Ces deux exigences que l'on rencontre de plus en plus souvent simultanément font que les joints actuellement connus ne donnent pas satisfaction. En effet les aciers inoxydables dont l'utilisation est nécessaire pour pouvoir résister aux agents corrosifs ont une tendance naturelle au grippage qui se trouve fortement augmentée par la nécessité d'utiliser des pressions de contact élevées au niveau des surfaces métalliques d'étanchéité.

C'est la raison pour laquelle les seuls joints connus à ce jour qui permettent de résoudre ce problème comportent des surfaces d'étanchéité très fortement inclinées (de l'ordre de 30°) par rapport à l'axe du tube, une butée de limitation de vissage venant immédiatement s'opposer à un vissage ultérieur dès que le contact a été obtenu au niveau des surfaces d'étanchéité. On comprend que ce type de joint est d'une mise en oeuvre et d'un usinage difficiles car la butée de limitation de vissage doit être positionnée de manière extrêmement précise par rapport aux surfaces fortement coniques d'étanchéité (US-A-2 258 066).

La présente invention est relative à un joint à étanchéité métal sur métal comportant des surfaces d'étanchéité faiblement coniques et qui est étanche à des pressions élevées sans risquer de donner lieu à des phénomènes de grippage même lorsque ces joints sont réalisés en acier, en acier inoxydable ou fortement chargé en chrome, en nickel et en autres éléments d'addition.

La présente invention a pour objet un joint pour tubes d'acier étanche à des pressions élevées du type comportant au moins un couple de surfaces d'étanchéité faiblement coniques disposées à au moins une extrémité de l'élément mâle ou de l'élément femelle, caractérisé par le fait que le premier contact de la zone d'étanchéité se trouvant à l'extrémité d'un élément s'effectue sur la surface d'étanchéité correspondante de l'autre élément et que lors de ce premier contact la conicité de la surface d'étanchéité qui se situe à l'extrémité d'un des éléments du joint est inférieure à la conicité de la surface d'étanchéité correspondante qui est située sur l'autre élément du joint, les surfaces d'étanchéité venant s'appliquer l'une contre l'autre lors du serrage avec une pression de contact suffisante pour assurer l'étanchéité.

Les essais qui ont été faits par la Société demanderesse ont révélé que pour une raison qui n'a pu être déterminée avec certitude les joints qui présentent les caractéristiques qui viennent d'être définies ci-dessus peuvent être vissés en appliquant les surfaces d'étanchéité l'une contre l'autre avec des pressions très élevées sans que se produise un grippage nuisible à une bonne étanchéité et à la conservation de la bonne qualité de ces surfaces, et ceci même lorsque les éléments du joint sont réalisés en acier ou alliage fortement chargé en chrome, en nickel et en autres éléments d'addition et ont de ce fait une propension toute particulière au grippage.

Conformément à l'invention les inclinaisons des génératrices d'un couple de surfaces coniques d'étanchéité doivent au moment du premier contact avoir une différence correspondant à une pente angulaire d'environ 0,5 à 2 % et de préférence comprise entre environ 0,75 et 1 %, ce qui correspond à une différence angulaire comprise entre environ 3/10 et 11/10 de degrés et de préférence comprise entre 4/10 et 6/10 de degré.

Conformément à l'invention la différence angulaire entre les génératrices des deux surfaces d'étanchéité est d'autant plus importante que le rapport de l'épaisseur au diamètre des tubes est moins élevé.

Conformément à l'invention le joint comporte avantageusement une butée de limitation de vissage de manière à ce qu'un serrage excessif n'engage pas trop profondément l'élément mâle dans l'élément femelle en dépassant inutilement les pressions de contact nécessaires entre les surfaces d'étanchéité et en risquant de les détériorer.

La présente invention peut être utilisée sur des joints à filetages coniques ou à filetages cylindriques. Elle peut être également utilisée sur des joints qui comportent un seul couple de surfaces d'étanchéité ou sur ceux qui comportent deux couples de surfaces d'étanchéité disposés l'un à l'extrémité de l'élément mâle et l'autre à l'extrémité de l'élément femelle de part et d'autre des filetages.

Dans le but de mieux faire comprendre l'invention on va en décrire maintenant à titre d'illustration et sans aucun caractère limitatif plusieurs modes de réalisation donnés à titre d'exemple et représentés sur le dessin dans lequel :

la figure 1 est une vue schématique en coupe montrant comment le premier contact de la zone d'étanchéité se trouvant à l'extrémité d'un des éléments doit s'effectuer sur la surface conique d'étanchéité de l'autre élément,

la figure 2 correspond à la figure 1 mais dans le cas où le premier contact ne s'effectue pas conformément à l'invention,

les figures 3 et 4 représentent schématiquement les différences de diamètre que doivent présenter les couples de surfaces d'étanchéité pour que le premier contact s'effectue conformément à l'invention,

les figures 5 et 6 représentent schématiquement un joint selon l'invention dans lequel les surfaces d'étanchéité sont situées à l'extrémité de l'élément femelle,

les figures 7 et 8 représentent schématiquement un joint selon l'invention dans lequel les surfaces d'étanchéité sont situées à l'extrémité de l'élément mâle,

les figures 9 et 10 représentent schématiquement un joint à double filetage cylindrique selon l'invention dans lequel les surfaces d'étanchéité sont situées à l'extrémité de l'élément mâle,

les figures 11 et 12 représentent un joint selon l'invention muni d'un filetage tronconique et de deux couples de surfaces d'étanchéité situées à l'extrémité de l'élément femelle,

les figures 13, 14 et 15 représentent un joint selon l'invention muni d'un filetage tronconique et comportant un premier couple de surfaces d'étanchéité à l'extrémité de l'élément femelle et un second couple de surfaces d'étanchéité au voisinage de l'extrémité de l'élément mâle.

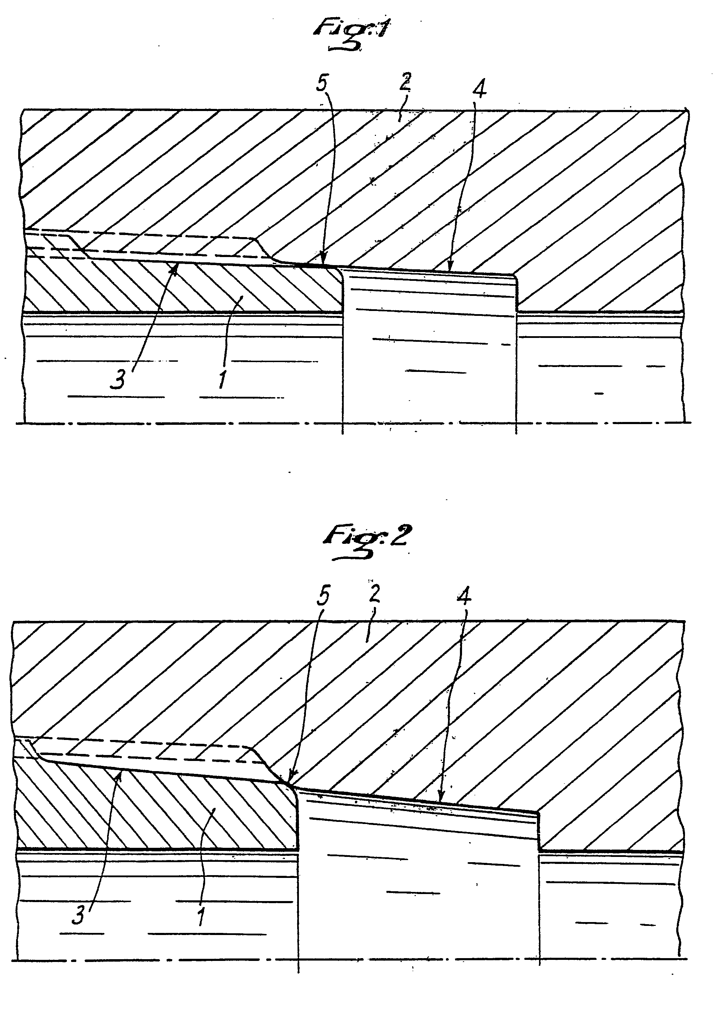

On a représenté schématiquement sur la figure 1 comment doit s'effectuer le premier contact entre deux surfaces d'étanchéité d'un joint selon l'invention.

Dans le mode de réalisation représenté sur la figure 1 l'étanchéité s'effectue à l'extrémité de l'élément mâle. On retrouve sur cette figure l'élément mâle 1, l'élément femelle 2, la surface tronconique 3 d'étanchéité de l'élément mâle 1 et la surface tronconique 4 d'étanchéité de l'élément femelle 2. Conformément à l'invention le premier contact entre la zone d'étanchéité à l'extrémité de l'élément mâle et la surface d'étanchéité de l'élément femelle doit avoir lieu sur la surface tronconique 4 de l'élément femelle 2 comme on le voit représenté en 5 sur la figure 1.

On a représenté sur la figure 2 la manière dont au contraire le premier s'effectue entre l'extrémité de l'élément mâle et l'élément femelle d'une manière qui n'est pas conforme à l'invention. Dans ce cas le point de premier contact 5 ne se trouve pas situé sur la surface d'étanchéité tronconique 4 de l'élément femelle mais sur la zone qui raccorde cette surface tronconique au filetage.

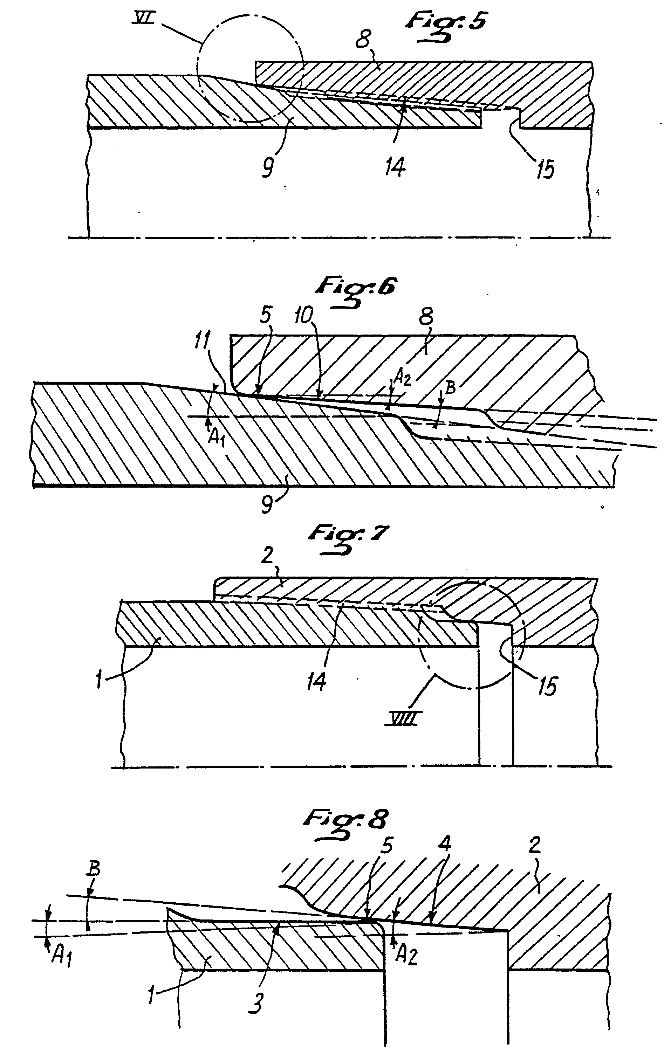

On a représenté à nouveau sur la figure 6 les parties concernant l'étanchéité du joint de la figure 1. On y a également reporté le point 6 qui est l'extrémité de la ligne théorique de la génératrice de la surface conique 3 de l'élément mâle 1 ainsi que le point 7 qui est l'extrémité théorique de la génératrice du tronc de cône de la surface d'étanchéité 4 de l'élément femelle 2.

Pour que la condition conforme à l'invention représentée sur la figure 1 soit réalisée il suffit que le diamètre D1 de l'élément mâle au point 6 soit légèrement inférieur au diamètre D2 de l'élément femelle au point 7.

On comprend dans ces conditions que le premier contact de l'élément mâle s'effectue sur la surface tronconique 4 d'étanchéité de l'élément femelle.

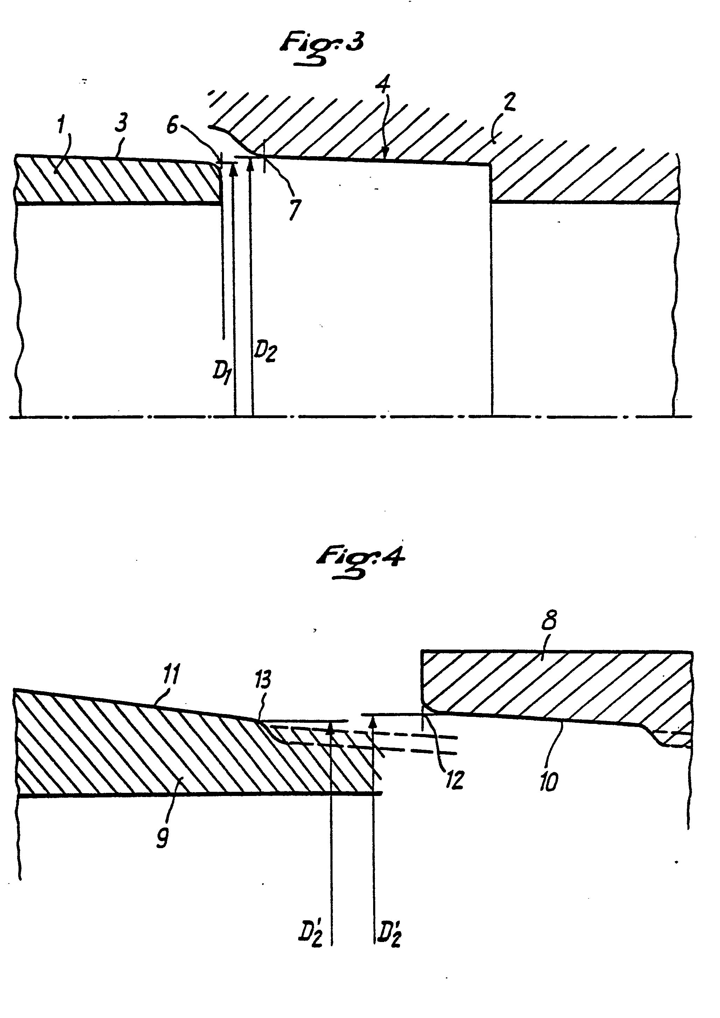

On a représenté sur la figure 4 le cas où l'étanchéité selon l'invention se trouve à l'extrémité de l'élément femelle 8, l'élément mâle étant schématiquement représenté en 9.

Le point d'extrémité de la ligne théorique de la génératrice de la surface tronconique d'étanchéité 10 de l'élément femelle est représenté en 12 alors que le point correspondant de la ligne théorique de la génératrice de la surface tronconique 11 de l'élément mâle est représenté en 13. Pour que la condition selon l'invention soit réalisé il suffit que le diamètre D'1 correspondant au point 13 soit légèrement inférieur au diamètre D'2 correspondant au point 12.

Il va de soi que, aussi bien dans le cas de la figure 3 que dans celle de la figure 4 la différence existant entre les diamètres D1, D2 et D'1, D'2 doit être suffisamment faible pour permettre le frettage des deux surfaces d'étanchéité l'une dans l'autre afin d'obtenir de la pression de contact nécessaire à l'étanchéité que l'on désire leur conférer.

On a représenté sur la figure 5 un joint selon l'invention dans lequel les surfaces d'étanchéité sont situées à l'extérieur du tube à l'extrémité de l'élément femelle 8. On y a schématiquement représenté le filetage 14 qui permet l'assemblage des deux éléments tubulaires, ainsi que la butée 15 réalisée à l'intérieur de l'élément femelle et contre laquelle vient prendre appui l'extrémité de l'élément mâle pour éviter un vissage excessif du joint.

La figure 6 reprend à plus grande échelle la partie VI de la figure 5. Elle représente le joint au moment où l'extrémité de l'élément femelle 8 vient en contact en 5 avec la surface d'étanchéité tronconique 11 de l'élément mâle 9 conformément à une des caractéristiques de l'invention.

On a représenté sur la figure 6 en A1 et A2 les angles que font les génératrices des surfaces tronconiques d'étanchéité 11 de l'élément mâle 9 et 10 l'élément femelle 8 par rapport à l'axe du tube.

Conformément à l'invention la pente A2 de la surface d'étanchéité 10 qui se trouve à l'extrémité de l'élément femelle 8 est inférieure à la pente A1 de la surface d'étanchéité 11 de l'élément mâle 9 qui est séparée de l'extrémité de l'élément mâle par toute la longueur des filetages 14. Cela se traduit sur la figure 6 par le fait que l'angle A1 est supérieur à l'angle A2 ce qui au moment où s'effectue le premier contact en 5 laisse entre les deux surfaces d'étanchéité 10 et 11 un angle B égal à A1-A2.

Il est clair que lorsque l'on poursuit le vissage de manière à ce que l'extrémité de l'élément mâle 9 vienne au contact de la butée 15 cette différence angulaire B tend progressivement vers zéro, la surface d'étanchéité 10 de l'élément venant s'appliquer complètement sur la surface d'étanchéité 11 de l'élément mâle.

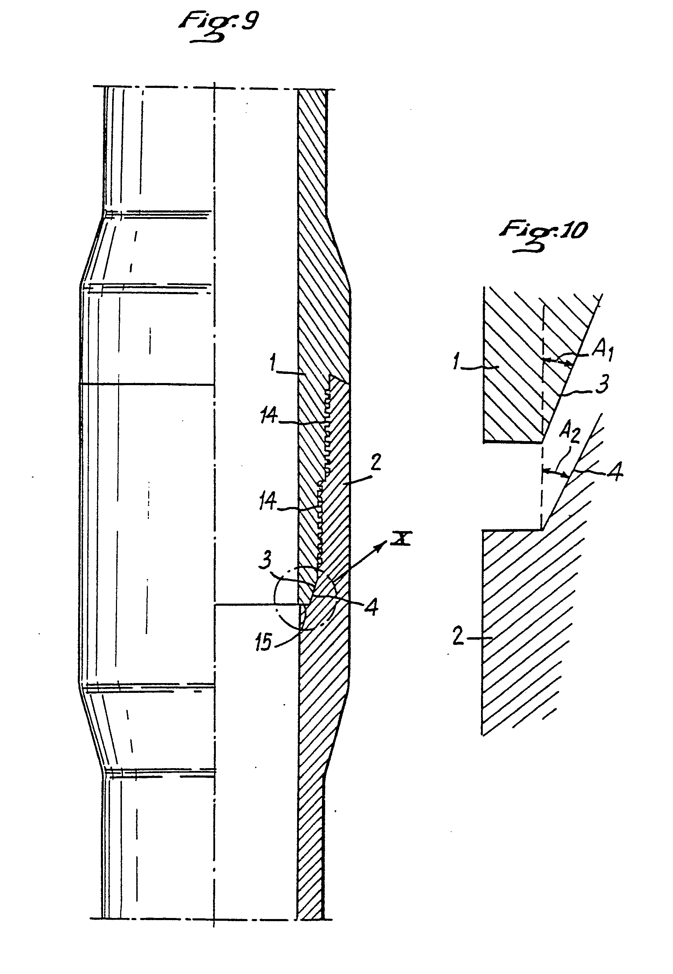

On a représenté sur la figure 7 un mode de réalisation de l'invention dans lequel l'étanchéité se trouve à l'intérieur du joint, à l'extrémité de l'élément mâle 1 qui vient prendre appui en fin de serrage contre la butée 15 de limitation de vissage située sur l'élément femelle 2.

Comme on peut le voir sur la figure 8 qui représente à plus grande échelle la partie VIII de la figure 7, le premier contact de l'élément mâle 1 s'effectue en 5 sur la surface tronconique d'étanchéité 4 de l'élément femelle 2.

Comme on l'a représenté sur le dessin et conformément à l'invention l'angle A1 que fait la génératrice de la surface d'étanchéité 3 qui est à l'extrémité de l'élément mâle 1 avec l'axe du tube est inférieur à l'angle A2 que fait la génératrice de la surface 4 de l'élément femelle avec l'axe du tube, la différence A2-A1 étant représentée par l'angle B.

Bien entendu, dans ce cas également, lorsque le joint est serré et que l'extrémité de l'élément mâle 1 est venue prendre appui contre la butée de limitation de vissage 15, les surfaces 3 et 4 sont appliquées l'une sur l'autre sur toute leur longueur avec la pression de contact suffisante pour assurer l'étanchéité même aux fortes pressions.

On a représenté en demi-coupe axiale sur la figure 9 un joint selon l'invention à l'état vissé, qui comporte un filetage cylindrique 14 à deux étages, une butée de limitation de vissage 15 disposée à l'extrémité de l'élément mâle 1 et une zone d'étanchéité disposée à l'extrémité de l'élément mâle et constituée par la surface d'étanchéité 3 de l'élément mâle 1 et la surface d'étanchéité 4 de l'élément femelle 2.

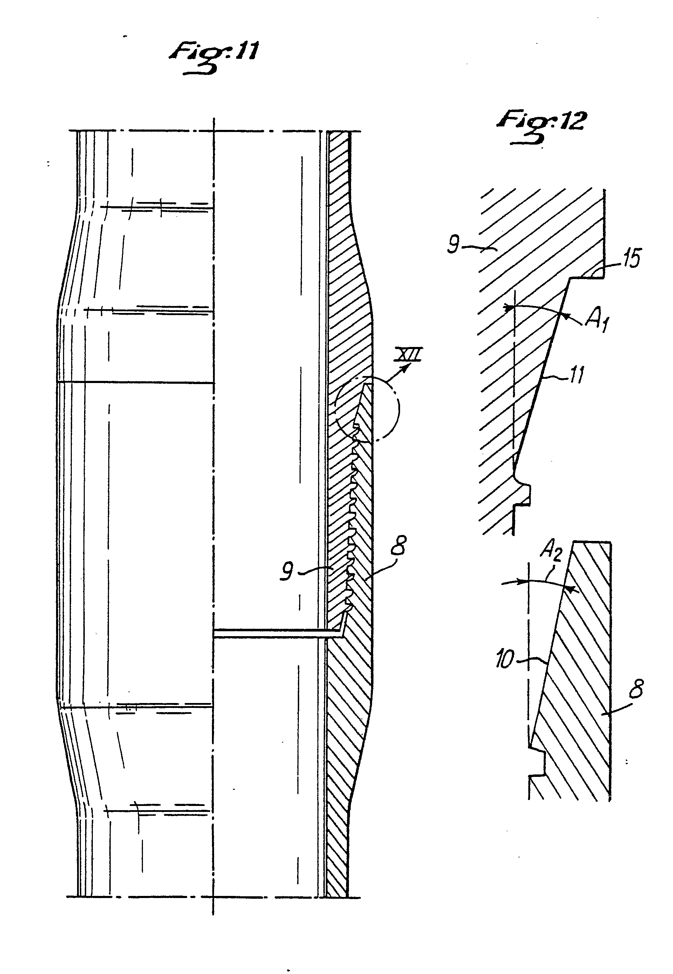

On a représenté à plus grande échelle sur la figure 10 les parties des éléments mâles 1 et 2 qui entourent la zone d'étanchéité.

Comme indiqué sur la figure 10 et conformément à l'invention la pente de la surface 3 de l'élément mâle est inférieure à la pente de la surface 4 de l'élément femelle 2.

Dans le mode de réalisation représenté et avec un tube dont le diamètre extérieur est de 180 millimètres et l'épaisseur de 9 millimètres réalisé en un acier ayant une teneur en chrome supérieure à 20 %, la pente de la surface d'étanchéité 3 de l'élément mâle représenté par l'angle A1 est égale à 4,25 % alors que la pente de la surface 4 de l'élément femelle représentée par l'angle A2 est égale à 5 % ce qui conformément à l'invention correspond avant serrage à une différence de pente angulaire de 0,75 %.

On a représenté sur la figure 11 un mode de réalisation particulier de l'invention comportant un joint à filetage tronconique avec des surfaces d'étanchéité disposées à l'extrémité de l'élément femelle lequel comporte également une butée 15 de limitation de vissage contre laquelle vient prendre appui l'extrémité de l'élément femelle 8.

Comme on peut le voir sur la figure 12 la pente de la surface d'étanchéité 10 de l'élément femelle 8 qui est représentée par l'angle A2 est égale à 24 % alors que la pente de la surface d'étanchéité 11 de l'élément mâle 9 est représentée par l'angle A1 qui est égale à 25 %.

Conformément à l'invention la pente de la surface 10 qui est à l'extrémité de l'élément femelle 8 est inférieure de 1 % à la pente de la surface d'étanchéité 11 de l'élément mâle.

On a enfin représenté sur la figure 13 un mode de réalisation d'un joint selon l'invention qui comporte deux zones d'étanchéité disposées d'une part à l'extrémité de l'élément mâle 1 et d'autre part à l'extrémité de l'élément femelle 2.

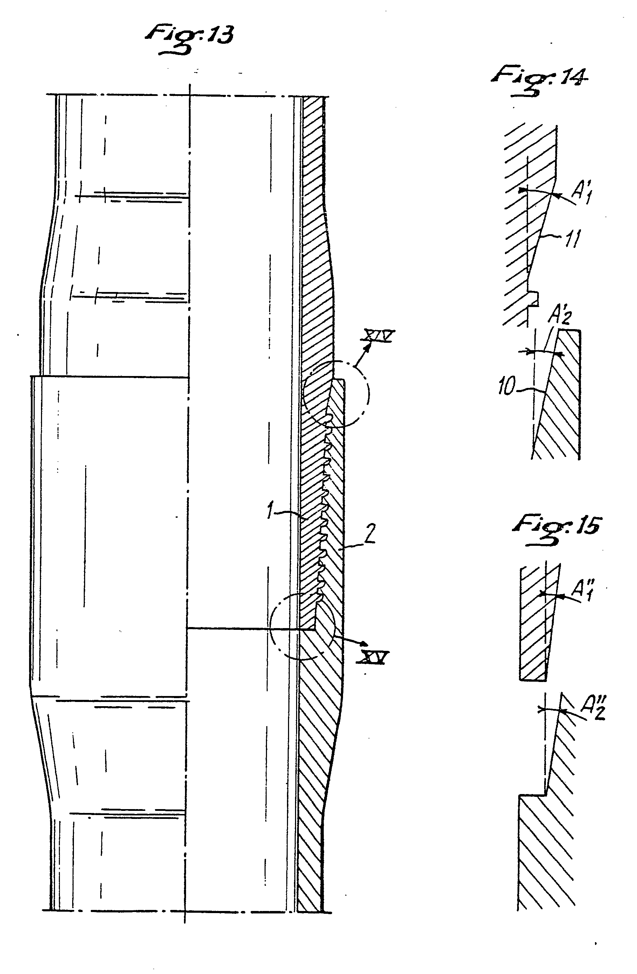

On a représenté à plus grande échelle sur les figures 14 et 15 ces deux zones d'étanchéité.

On voit sur la figure 14 les pentes A'1 et A'2 des surfaces d'étanchéité 11 et 10 et sur la figure 15 les pentes A''1 et A''2 des surfaces d'étanchéité 3 et 4. Conformément à l'invention A'1 correspond à une pente de 25 % (ou de 14 degrés), A'2 correspond à une pente de 24 % (ou de 13,5 degrés) et A''1 correspond à une pente de 5,25 % (ou de 3 degrés) et A''2 correspond à une pente de 6 % (ou de 3,5 degrés).

On remarque que la différence de pente angulaire est égale à 1 % dans le cas de la figure 14 et que dans celui de la figure 15 elle est égale à 0,75 %.

Dans les deux cas, conformément à l'invention, ce sont les surfaces d'étanchéité qui sont situées à l'extrémité d'un élément (10 sur la figure 14 et 3 sur la figure 15) qui ont les conicités les plus faibles.

Il est bien entendu que les modes de réalisation qui ont été décrits ci-dessus ne sont indiqués qu'à titre d'exemple et qu'ils pourront être modifiés sans sortir pour cela du cadre de l'invention.

En particulier l'invention peut s'appliquer à tous les tubes et n'est pas limitée à certaines nuances d'acier.

## Revendications

1. Joint pour tubes, notamment en acier ou en alliage, étanche à des pressions élevées du type comportant au moins un couple de surfaces d'étanchéité faiblement coniques étant en contact dans leur ensemble, qui viennent prendre contact l'une contre l'autre lors du serrage du joint et qui sont disposées à au moins une extrémité d'un élément mâle (1) ou d'un élément femelle (2) caractérisé par le fait que le premier contact (5) de la zone d'étanchéité (3) se trouvant à l'extrémité d'un des éléments (1, 2) s'effectue sur la surface d'étanchéité correspondante (4) de l'autre des éléments (1, 2), et que lors de ce premier contact la conicité de la surface d'étanchéité (3) qui se situe à l'extrémité d'un des éléments du joint est inférieure à la conicité de la surface d'étanchéité (4) correspondante qui est située sur l'autre élément du joint, les surfaces d'étanchéité venant, lors du serrage, s'appliquer dans leur ensemble l'une contre l'autre avec une pression de contact suffisante pour assurer l'étanchéité, ledit joint étant peu sensible au grippage.

2. Joint selon la revendication 1, caractérisé par le fait qu'au moment du premier contact les génératrices d'un couple de surfaces coniques d'étanchéité ont des différences angulaires (B) correspondant à une pente d'environ 0,5 à 2 % et de préférence comprise entre 0,75 et 1 %.

3. Joint selon l'une quelconque des revendications 1 et 2, caractérisé par le fait qu'il comporte une butée de limitation de vissage (15) qui limite le serrage du joint dès que les pressions nécessaires ont été obtenues entre les différents points des surfaces d'étanchéité.

4. Joint selon l'une quelconque des revendications précédentes, caractérisé par le fait qu'il comporte des filetages coniques (figure 11).

5. Joint selon l'une quelconque des revendications 1 à 3, caractérisé par le fait qu'il comporte des filetages cylindriques (figure 9).

6. Joint selon l'une des revendications 1 à 5, caractérisé par le fait qu'il comporte deux couples de surfaces d'étanchéité (figures 14 et 15) disposés l'un à l'extrémité de l'élément mâle et l'autre à l'extrémité de l'élément femelle de part et d'autres des filetages.

7. Joint selon l'une quelconque des revendications précédentes, caractérisé par le fait que la différence angulaire entre les génératrices des deux surfaces d'étanchéité est d'autant plus importante que le rapport de l'épaisseur au diamètre des tubes est moins élevé.

**Claims**

1. A coupling for pipes, especially of steel or alloy, oiltight at high pressures, being of the type which includes at least one pair of slightly tapering sealing surfaces which are wholly in contact, coming into contact with one another at the time of tightening the joint, and which are arranged at least one end of a male member (1) or of a female member (2), characterized by the fact that the first contact (5) of the sealing zone (3) lying at the end of one of the members (1, 2) is effected against the corresponding sealing surface (4) of the other of the members (1, 2), and that at the time of this first contact the taper of the sealing surface (3) which is situated at the end of one of the joint members is less than the taper of the corresponding sealing surface (4) which is situated on the other joint member, the sealing surfaces at the time of tightening becoming applied wholly against one another with a contact pressure sufficient to ensure sealing, the said joint showing little tendency to seizing.

2. A coupling as in Claim 1, characterized by the fact that at the time of the first contact the generatrices of a pair of tapering sealing surfaces have angular differences (B) corresponding with a slope of about 0.5 to 2 % and preferably lying between 0.75 and 1 %.

3. A coupling as in either of the Claims 1 and 2, characterized by the fact that it includes a stop (15) for limiting screwing, which limits the tightening of the joint as soon as the necessary pressures have been obtained between the various points on the sealing surfaces.

4. A coupling as in any one of the preceding Claims, characterized by the fact that it includes taper threads (Figure 11).

5. A coupling as in any one of the Claims 1 to 3, characterized by the fact that it includes cylindrical threads (Figure 9).

6. A coupling as in one of the Claims 1 to 5, characterized by the fact that it includes two pairs of sealing surfaces (Figures 14 and 15) arranged one at the end of the male member and the other at the end of the female member on opposite sides of the threads.

7. A coupling as in any one of the preceding Claims, characterized by the fact that the angular difference between the generatrices of the two sealing surfaces is the greater, the less the ratio of thickness to diameter of the pipes.

**Patentansprüche**

1. Hochdruckdichtende Rohrverbindung, insbesondere aus Stahl oder Legierungen, die wenigstens ein insgesamt in Kontakt stehendes schwach konisches Paar von Dichtflächen aufweist, die beim Verschrauben gegeneinander in Kontakt kommen und die im Bereich wenigstens eines Endes eines Bolzenelementes (1) oder eines Mutterelementes (2) liegen, dadurch gekennzeichnet, daß die erste Berührung (5) des Dichtungsbereiches (3), der sich am Ende eines der Elemente (1, 2) befindet, mit der entsprechenden Dichtungsfläche (4) des anderen der Elemente (1, 2) stattfindet, und daß bei der ersten Berührung die Konizität der Dichtungsfläche (3), die sich am Ende eines der Elemente der Verbindung befindet, geringer als die Konizität der entsprechenden Dichtungsfläche (4) ist, die sich auf dem anderen Element der Verbindung befindet, wobei die Dichtungsflächen sich insgesamt beim Verspannen mit einem Kontaktdruck gegeneinander anlegen, der ausreichend ist, um die Dichtigkeit zu sichern, wobei die Verbindung gegen ein Festfressen wenig anfällig ist.

2. Verbindung nach Anspruch 1, dadurch gekennzeichnet, daß im Augenblick des ersten Kontaktes die Erzeugenden der konischen Dichtflächen Winkeldifferenzen (B) aufweisen, welche einer Neigung von 0,5 bis 2 % und vorzugsweise zwischen 0,75 bis 1 % entsprechen.

3. Verbindung nach einem der Ansprüche 1 und 2, dadurch gekennzeichnet, daß sie eine Einschraubbegrenzung (15) aufweist, welche die Verschraubung der Verbindung begrenzt, sobald die notwendigen Drucke zwischen den verschiedenen Punkten der Dichtungsflächen erreicht werden.

4. Verbindung nach einem der vorhergehenden Ansprüche, dadurch gekennzeichnet, daß sie konische Gewinde (Fig. 11) aufweist.

5. Verbindung nach einem der Ansprüche 1 bis 3, dadurch gekennzeichnet, daß sie zylindrische Gewinde (Fig. 9) aufweist.

6. Verbindung nach einem der Ansprüche 1 bis 5, dadurch gekennzeichnet, daß sie zwei Dichtflächenpaare aufweist (Fig. 14 und 15), von denen das eine am Ende des Bolzenelementes und das andere am Ende des Mutterelementes beiderseits der Gewinde angeordnet ist.

7. Verbindung nach einem der vorhergehenden Ansprüche, dadurch gekennzeichnet, daß die Winkeldifferenz zwischen den Erzeugenden der beiden Dichtflächen umso größer ist je weniger groß das Verhältnis der Dicke zum Durchmesser der Rohre ist.

*Fig.1*

*Fig.2*

Fig. 3

Fig. 4

*Fig.5*

*Fig.6*

*Fig.7*

*Fig.8*

3

0 089 253

*Fig. 9*

*Fig. 10*

4

Fig.11

Fig.12

*Fig. 13*

*Fig. 14*

*Fig. 15*

6